# EUROPEAN PATENT SPECIFICATION

(11) **EP 4 081 611 B1**
(45) Date of publication and mention of the grant of the patent: **24.04.2024**
(21) Application number: 20841710.5
(22) Date of filing: 22.12.2020
(51) Int. Cl.: C09K 11/77

(54) **COMPOSITION OF MVO4:YB3+,REM,D CRYSTALS, METHOD OF PRODUCING THE SAME AND USES OF SAID COMPOSITION**
ZUSAMMENSETZUNG VON SUBMIKRONKRISTALLEN MIT VERBESSERTER AUFWÄRTSKONVERSIONSLUMINESZENZ
COMPOSITION DE CRISTAUX SUBMICRONIQUES À LUMINESCENCE AMÉLIORÉE PAR CONVERSION ASCENDANTE

(30) Priority: 23.12.2019 EP 19219299
(43) Date of publication of application: 02.11.2022
(73) Proprietor: Karlsruher Institut für Technologie, 76131 Karlsruhe (DE)
(72) Inventor: TURSHATOV, Andrey, 64347 Griesheim (DE); BUSKO, Dmitry, 76646 Bruchsal (DE); TUHIN, Samanta, West Bengal Howrah 712408 (IN); RICHARDS, Bryce, 76297 Stutensee-Blankenloch (DE); HOWARD, Ian, 76137 Karlsruhe (DE)
(74) Representative: Müller-Boré & Partner Patentanwälte PartG mbB
(86) International application number: PCT/EP2020/087647
(87) International publication number: WO 2021/130235

(56) References cited:
- EP-A1- 1 473 347
- DATABASE WPI Week 201853 Thomson Scientific, London, GB; AN 2018-46423F XP002799153, -& CN 108 130 081 A (UNIV NANJING INFORMATION SCI & TECHNOLOG) 8 June 2018 (2018-06-08)
- Paulo C De ET AL: "SUPPORTING INFORMATION Colloidal Rare Earth Vanadate Nanocrystals as Ratiometric Luminescent Nanothermometers", , 31 January 2019 (2019-01-31), XP055698950, Retrieved from the Internet: URL:https://pubs.acs.org/doi/suppl/10.1021 /acs.jpcc.8b12251/suppl_file/jp8b12251_si_ 001.pdf [retrieved on 2020-05-27]
- SAWALA N S ET AL: "Near-infrared quantum cutting in Yb3+ion doped strontium vanadate", INFRARED PHYSICS AND TECHNOLOGY, ELSEVIER SCIENCE, GB, vol. 76, 9 March 2016 (2016-03-09), pages 271-275, XP029540130, ISSN: 1350-4495, DOI: 10.1016/J.INFRARED.2016.03.007

## Description

The present invention relates to an MVO₄ composition doped with Yb³⁺, Rem and D for photoluminescence having the chemical formula MVO₄:Yb³⁺,Rem,D, a method for producing said composition, and uses of said composition.

Photoluminescence is the emission of photons from direct photoexcitation of any form of matter after the absorption of photons (electromagnetic radiation). The photoluminescence can include down-shifting or up-conversion processes. If the energy of the emitted photons is less than the energy of the absorbed photons, the photoluminescence is described as down-shifting process. Vice versa, photon up-conversion is an optical process in which photons with low energy are transformed inside some optical medium into photons with higher energy. The down-shifting and up-conversion process in solid host matrixes doped with ions of rare earth elements ("Rem") are based on emission of visible, near infrared (NIR) or infrared (IR) photons under excitation with visible, NIR or IR light.

CN 108 130 081 A discloses ytterbium-erbium co-doped gadolinium vanadate green up-converting luminescent nanocrystals.

Photoluminescent materials generally have unique properties, and thus differentiating up-conversion (UC) photonic markers based on their emission wavelength can be used for security marking and object sorting, such as anti-counterfeiting and plastic sorting. Tracer-based sorting (TBS) and tracer-based identification (TBI) are technologies in which materials are marked with photoluminescent, inert tracers - the photonic marker - and are then identified either in a high throughput conveyer-belt process or a simple screening device via the distinctive properties of their luminescence. To be applicable as photonic markers, materials should demonstrate several features, particularly a high photoluminescence quantum yield (PLQY > 0.5 %) at relatively low excitation intensity (I < 10 W/cm²); efficient production characteristics (not too many process steps); good biocompatibility; and small particle sizes as of production. In particular, for several applications the photonic markers should have a small size (preferably a diameter < 1 µm) if the markers are included in a composition for ink-jet printing or need to be dispersed in a thin polymer layer (with a typical thickness of 1 to 50 µm).

Several different technologies are currently proposed that have relevance to both plastics recycling and anti-counterfeiting industries. The main option is to use a Fourier-transform infrared (FT-IR) spectroscopic technique for identification of the polymer type, as well as employing color recognition cameras to enable sorting of clear versus colored. As another technology for plastic recycling/sorting and anti-counterfeiting, there have been used systems which are based on the addition of a marker that, once standardized, would provide a unique identification of a specific resin type. Inorganic crystalline materials doped with Rem ions are examples of prospective photonic markers for plastic sorting and anti-counterfeiting.

As already outlined above, high PLQY is one of the key requirements for photonic markers. With high PLQY at relatively low excitation intensity, the level of doping concentration can be reduced significantly, resulting in reduction of production costs and reduction of the (negative) effects of the marker on the properties of marked materials.

In view of the above, the technical problem underlying the present invention is to provide a new composition for photoluminescence, which achieves a high photoluminescence quantum yield (PLQY) at low excitation intensity and, at the same time, has efficient production characteristics (not too many process steps), has stability at high temperatures, exhibits good biocompatibility, and has a small particle diameter (in the range of micron or submicron) as of production.

The solution to the above technical problem is achieved by the embodiments characterized in the claims.

In particular, the present invention provides an MVO₄ composition doped with Yb³⁺, Rem and D and having the chemical formula MVO₄:Yb³⁺,Rem,D
wherein M is at least one ion selected from Gd³⁺, Y³⁺, La³⁺ and Lu³⁺,
wherein Rem is at least one rare earth element ion selected from Ce³⁺, Dy³⁺, Er³⁺, Eu³⁺, Ho³⁺, Nd³⁺, Pr³⁺, Sm³⁺, Tb³⁺ and Tm³⁺,
wherein D is at least one metal ion selected from Zn²⁺, Mg²⁺, Ca²⁺ and Sr²⁺, and
wherein the doping amount of MVO₄ is that 1.0 to 40 mol% of the M³⁺ ions of the host matrix MVO₄ are substituted by Yb³⁺ ions, 0.1 to 5.0 mol% of the M³⁺ ions of the host matrix MVO₄ are substituted by Rem ions, and 5.0 to 25 mol% of the M³⁺ ions of the host matrix MVO₄ are substituted by D ions.

The term "composition" according to the present invention is to be understood as particles (crystals) of MVO₄ doped with Yb³⁺, Rem and D having the aforementioned chemical formula. The particles (crystals) of doped MVO₄ have a small particle diameter of preferably 10 µm or less, more preferably of 5 µm or less. According to the present invention, the particle diameter represents the maximum diameter of the particles (crystals). According to a preferred embodiment of the present invention, the composition of the present invention is a submicron composition, i.e. each of the particles (crystals) of the composition has a (maximum) diameter of less than 1 µm. More preferably, each of the particles (crystals) of the composition has a diameter of 0.5 µm or less, and most preferred 0.3 µm or less (such as e.g. about 0.2 µm). According to another embodiment of the present invention, the particles (crystals) of the composition have a (maximum) diameter of about 1 µm to about 10 µm, more preferably from about 1 µm to about 5 µm, and even more preferably from about 1 µm to about 3 µm, i.e. the composition of the present invention can be seen as microparticles. Such a small particle diameter advantageously does not worsen up-conversion photoluminescence quantum yield (UC PLQY) at relatively low excitation intensity (such as I < 10 W/cm²) and leads to increased brightness of up-conversion luminescence if the particles are imbedded to a polymer matrix for polymer sorting or security application. The particle diameter, i.e. the maximum diameter of a particle, can e.g. be determined by Scanning Electron Microscopy (SEM) and/or Dynamic Light Scattering (DLS). Compositions of the present invention having such small particle diameter can be efficiently prepared e.g. by the method of the present invention described in detail below.

The composition for photoluminescence of the present invention has a host matrix of the chemical formula MVO₄ which is doped with Yb³⁺, Rem (ions) and D (ions). The composition of the present invention is represented by the chemical formula MVO₄:Yb³⁺,Rem,D.

In the above chemical formula MVO₄:Yb³⁺,Rem,D, the ions M³⁺ are the host-forming ions of the composition of the present invention. The M³⁺ ions are at least one ion selected from Gd³⁺, Y³⁺, La³⁺ and Lu³⁺. The M³⁺ ions in the above chemical formula may either be a mixture of one or more of the aforementioned M³⁺ ions, or the M³⁺ ions may only be one single element ions. According to a preferred embodiment of the present invention, M is Gd³⁺.

In the above chemical formula MVO₄:Yb³⁺,Rem,D, the ions Yb³⁺ are one of the photoactive elements of the composition of the present invention. Moreover, since Yb³⁺ ions partially substitute the M³⁺ ions in the composition, Yb³⁺ ions also partially act as host-forming elements of the composition.

In the above formula MVO₄:Yb³⁺,Rem,D, Rem is at least one rare earth element ion selected from Ce³⁺, Dy³⁺, Er³⁺, Eu³⁺, Ho³⁺, Nd³⁺, Pr³⁺, Sm³⁺, Tb³⁺ and Tm³⁺. Rem ions are also one of the photoactive elements of the composition of the present invention. Moreover, since Rem ions partially substitute the M³⁺ ions in the composition, Rem ions also partially act as host-forming elements of the composition. The Rem (ions) in the above chemical formula may either be a mixture of one or more of the aforementioned Rem (ions), or the Rem (ions) may only be one single element ions. According to a preferred embodiment of the present invention, Rem is at least one rare earth element ion selected from Er³⁺, Ho³⁺ and Tm³⁺. According to a particularly preferred embodiment, Rem is Tm³⁺or Er³⁺.

In the above formula MVO₄:Yb³⁺,Rem,D, D is at least one metal ion selected from Zn²⁺, Mg²⁺, Ca²⁺ and Sr²⁺. D ions are co-dopants which advantageously increase up-conversion photoluminescence quantum yield (UC PLQY) of the composition of the present invention to PLQY > 0.5 % at relatively low excitation intensity such as I < 10 W/cm². Moreover, since D ions partially substitute the M³⁺ ions in the composition, D ions also partially act as host-forming elements of the composition. The D (ions) in the above chemical formula may either be a mixture of one or more of the aforementioned D (ions), or the D (ions) may only be one single element ions. According to a preferred embodiment of the present invention, D is Zn²⁺.

In the composition of the present invention, the (doping) amount of Yb³⁺ is from 1.0 to 40 mol%. That is, 1.0 to 40 mol% of the M³⁺ ions of the host matrix MVO₄ are substituted by Yb³⁺ ions. According to a preferred embodiment of the present invention, the amount of Yb³⁺ is from 2.0 to 8.0 mol%, more preferred 3.0 to 7.0 mol%, more preferred from 4.0 to 6.0 mol%, and most preferred from 4.5 to 5.5 mol%. If the amount of Yb³⁺ is below 1.0 mol%, the composition of the present invention may not absorb enough light. If the amount of Yb³⁺ is above 40 mol%, there is a possibility of formation of several other crystalline phases that may reduce UC PLQY.

According to an alternatively preferred embodiment, particularly in case the composition of the present invention is embedded into a polymer matrix, the amount of Yb³⁺ is from 15 to 35 mol% in order to achieve a higher brightness (combination of absorption and PLQY), more preferred from 20 to 30 mol%. The polymer matrix is not particularly limited and any polymer matrix commonly used by a person skilled in the art can be used, such as e.g. polymer matrices composed of polyethylene, polystyrene, polyethers, polyurethanes, silicone resins, epoxides, etc.

In the composition of the present invention, the (doping) amount of Rem is from 0.1 to 5.0 mol%. That is, 0.1 to 5.0 mol% of the M³⁺ ions of the host matrix MVO₄ are substituted by Rem ions. According to a preferred embodiment of the present invention, particularly in case Rem is Tm³⁺ and/or Ho³⁺, the amount of Rem is from 0.1 to 1.0 mol%, more preferred 0.2 to 0.7 mol%, more preferred from 0.3 to 0.5 mol%, and most preferred from 0.35 to 0.45 mol%. If the amount of Rem is too high, cross-relaxation processes may reduce UC PLQY.

According to an alternatively preferred embodiment of the present invention, particularly in case Rem is Er³⁺, the amount of Rem is from 0.5 to 4.0 mol%, more preferred from 0.75 to 3.5 mol%, and most preferred from 1.0 to 3.0 mol%.

In the composition of the present invention, the (doping) amount of D is from 5.0 to 25 mol%. That is, 5.0 to 25 mol% of the M³⁺ ions of the host matrix MVO₄ are substituted by D ions. According to a preferred embodiment of the present invention, the amount of D is from 7.0 to 20 mol%, more preferred from 8.5 to 13 mol%, and most preferred from 9.0 to 11 mol%. If the amount of D is too low, enhancement of photoluminescence may not be observed. If the amount of D is too high, there is a possibility of formation of several other crystalline phases that reduce UC PLQY.

According to a particularly preferred embodiment of the present invention, the composition of the present invention is a GdVO₄ composition doped with Yb³⁺, Tm³⁺ or Er³⁺ and Zn²⁺ and has the chemical formula GdVO₄:Yb³⁺,Tm³⁺,Zn²⁺ or GdVO₄:Yb³*,Er³*, Zn²⁺, wherein the (preferred) amounts of Yb³⁺, Tm³⁺/Er³⁺ and Zn²⁺ are as indicated above.

The method for producing the composition for photoluminescence of the present invention is a co-precipitation method, since small particle diameters can be reliably achieved by such method. The co-precipitation method for producing the composition of the present invention comprises the steps of:
providing a first solution comprising an M-source, a Yb-source, a Rem-source and a D-source;
providing a second solution comprising a V-source;
mixing the first solution, the second solution and a water-soluble polymer or an organic ligand, thereby forming a precipitate;
separating and drying the precipitate; and
calcining the precipitate to obtain the MVO₄ composition doped with Yb³⁺, Rem and D.

The above method of the present invention can be used to produce the composition of the present invention. Accordingly, the explanations provided above with respect to the composition of the present invention also apply for the method of the present invention.

In the first step of the above method, there is provided first solution comprising an M-source (M³⁺-source), a Yb-source (Yb³⁺-source), a Rem-source (Rem³⁺-source) and a D-source (D²⁺-source), wherein M, Rem and D are the same as defined above with respect to the composition of the present invention. The M-source (M³⁺-source), Yb-source (Yb³⁺-source), Rem-source (Rem³⁺-source) and D-source (D²⁺-source) are mixed in the stoichiometric ratio which is desired for the to be obtained composition of the present invention. According to a preferred embodiment, the solvent of the first solution is water.

The M-source (M³⁺-source) of the present invention is not particularly limited, and any source which can provide M³⁺ ions for the composition of the present invention and can be dissolved in the solvent can be used. The M-source can be one specific compound or a mixture of two or more compounds. According to a preferred embodiment of the present invention, the M-source is an M-nitrate, an M-acetate or an M-chloride. According to a particularly preferred embodiment, the M-source is an M-nitrate, most preferred Gd(NO₃)₃.

The Yb-source (Yb³⁺-source) of the present invention is not particularly limited, and any source which can provide Yb³⁺ ions for the composition of the present invention and can be dissolved in the solvent can be used. The Yb-source can be one specific compound or a mixture of two or more compounds. According to a preferred embodiment of the present invention, the Yb-source is a Yb-nitrate, a Yb-acetate or a Yb-chloride, According to a particularly preferred embodiment, the Yb-source is Yb(NO₃)₃.

The Rem-source (Rem³⁺-source) of the present invention is not particularly limited, and any source which can provide Rem³⁺ ions for the composition of the present invention and can be dissolved in the solvent can be used, such as Rem nitrates, Rem acetates or Rem chlorides. According to a preferred embodiment, the Rem-source is a Rem nitrate, such as e.g. Er(NO₃)₃, Ho(NO₃)₃, or Tm(NO₃)₃. The Rem-source can be one specific compound or a mixture of two or more compounds. According to a preferred embodiment of the present invention, the Rem-source is Tm(NO₃)₃ or Er(NO₃)₃.

The D-source (D²⁺-source) of the present invention is not particularly limited, and any source which can provide D²⁺ ions for the composition of the present invention and can be dissolved in the solvent can be used, such as D nitrates, D acetates or D chlorides. According to a preferred embodiment, the D-source is a D chloride, such as e.g. ZnCl₂, MgCl₂, or SrCl₂. The D-source can be one specific compound or a mixture of two or more compounds. According to a preferred embodiment of the present invention, the D-source is ZnCl₂.

In the method of the present invention, there is further provided a second solution comprising a V-source (VO₄³⁻-source). The V-source of the present invention is not particularly limited, and any source which can provide VO₄³⁻ ions for the composition of the present invention and can be dissolved in the solvent can be used. The V-source can be one specific compound or a mixture of two or more compounds. According to a preferred embodiment of the present invention, the V-source is Na₃VO₄ or (NH₄)₃VO₄, most preferred Na₃VO₄. The V-source is dissolved in a concentration that is suitable to obtain the stoichiometric ratio for the to be obtained composition of the present invention. According to a preferred embodiment, the solvent of the second solution is water.

According to a particular preferred embodiment of the present invention, the M-source is M(NO₃)₃ (most preferred: Gd(NO₃)₃), the Yb-source is Yb(NO₃)₃, the Rem-source is Rem(NO₃)₃ (most preferred: Tm(NO₃)₃ or Er(NO₃)₃), the D-source is a chloride of D (most preferred: ZnCl₂), and the V-source is Na₃VO₄.

In the next step of the method of the present invention, the first solution, the second solution and a water-soluble polymer or an organic ligand are mixed to thereby form a precipitate. The presence of the water-soluble polymer or the organic ligand helps to control the size of the composition particles. According to a preferred embodiment, the water-soluble polymer is polyvinylpyrrolidone, polyethylene glycol or polyethyleneimine, most preferred polyvinylpyrrolidone. According to a preferred embodiment, the organic ligand is ethylene diamine tetraacetic acid (EDTA). Typically, per 1 mmol of M³⁺ (such as e.g. Gd(NO₃)₃), 0.001 g to 0.15 g of water-soluble polymer (such as e.g. polyvinylpyrrolidone) or organic ligand are admixed, which ensures that the particle diameter of the composition is from about 200 nm to about 10 µm, preferably from about 200 nm to about 5 µm, more preferably from about 200 nm to about 3 µm, and even more preferably from about 200 nm to about 1000 nm or less than 1000 nm, depending on the optimal size for the respective application.

In the next step of the method of the present invention, the precipitate is separated and dried. Any separation means (e.g. filtration) and drying means (e.g. drying oven) known to the person skilled in the art can be used.

The composition after precipitation usually displays pure crystallinity with a large number of structural defects, which quench photoluminescence. Therefore, in the next step of the method of the present invention, the (separated and dried) precipitate is calcined to obtain the composition of the present invention, i.e. the MVO₄ composition doped with Yb³⁺, Rem and D and having the chemical formula MVO₄:Yb³⁺,Rem,D. The calcination may be carried out at any suitable temperature, such as at 600 °C or more, for an appropriate time. According to a preferred embodiment of the present invention, calcining the precipitate is carried out at a temperature of at least 600 °C, such as from 600 °C to 1000 °C. More preferably, calcining the precipitate is carried out at a temperature of from 750 °C to 950°C for 1 to 3 hours, more preferred at a temperature of from 800 °C to 900 °C for 1.5 to 2.5 hours. Generally, it is assumed that the higher the temperature, the bigger the particles size. The calcination treatment improves the crystallinity of the composition and removes the water-soluble polymer (e.g. polyvinylpyrrolidone) or the organic ligand. If the temperature is too low and/or the calcination time is too short, the structural defects may not disappear. If the temperature is too high, sintering of the (sub)micron particles may occur, leading to a significantly larger size and size distribution. In particular, in the range of 600 °C to 750 °C, the calcination time is less relevant and the particles obtained have usually a small particle size, i.e. an average size of from 200 to 500 nm. Above 750 °C, a higher temperature and longer calcination time leads to an increase of particle size (i.e. up to 1 to 10 µm), as shown in Example 4 below.

In a further aspect, the present invention provides the use of the composition of the present invention for (plastic) sorting or as photonic marker in anti-counterfeiting or for quality control.

In particular, the composition for photoluminescence of the present invention can be used for sorting objects or materials like plastics. The composition of the present invention may be incorporated into any material or object, and said marked material or object may then be (automatically) separated from a mixture of various materials or objects (in a suitable device/machine) after the material which contains the composition of the present invention has been identified by a spectrophotometric analysis. The term "incorporated" is to be understood in a broad sense and covers not only the incorporation of the composition into the bulk of a material or object but also the incorporation into a carrier that is attached to a material or object. Suitable carriers can be adhesive labels, tags, stickers or the like.

According to another embodiment, the composition for photoluminescence of the present invention can be used as an anti-counterfeiting (photonic) marker. In particular, the composition of the present invention may be incorporated into an object or material as a marker, which object or material may then be identified by a spectrophotometric analysis so as to determine the presence or absence of the marker, thereby determining whether the object or material is authentic or not.

According to another embodiment, the composition for photoluminescence of the present invention may be incorporated into an object or material as a marker for quality control or formulation control. For example, this allows to control the presence and/or amount of a marked component in a mixture of components or in a manufactured material or object.

Due to the co-doping of the composition of the present invention with D ions and due to the small particle diameter of each of the particles of the composition, the composition of the present invention advantageously achieves an increased intensity of near-infrared luminescence emission at low excitation intensity and has stability at high temperatures. Due to the specific production method of the present invention, the obtained composition of the present invention has a small particle diameter of preferably 10 µm or less, particularly of less than 1 µm as of production. Therefore, the composition of the present invention can advantageously be used for (plastic) sorting and as an anti-counterfeiting marker, particularly in applications in which photonic markers should have a small size (micron or submicron range; diameter ≤ 10 µm, preferably ≤ 5 µm, more preferably ≤ 3 µm, and even more preferably < 1 µm), e.g. in case the markers are included in composition for ink-jet printing or need to be dispersed in a thin polymer layer (with typical thickness of 1 to 50 µm). Notably, markers with a larger particle size of up to 10 µm or up to 5 µm, for instance, can be also used in printing (e.g. to print labels for plastic sorting). However, in such a case, it is preferably to use other printing methods (not ink-jet printing), such as offset printing, for instance.

The Figures show:
Figure 1 shows an XRD spectrum of the composition of Example 1.
Figure 2 shows a Scanning Electron Microscopy (SEM) picture of the composition of Example 1.
Figure 3 shows the up-conversion (UC) emission spectra of the compositions of Example 1 and Comparative Example 1.
Figure 4 shows the up-conversion (UC) emission spectra of the compositions of Example 1 and Comparative Example 2.
Figure 5 shows the down-shifting luminescence of the compositions of Example 2.
Figure 6 shows the down-shifting luminescence of the compositions of Example 3.
Figure 7 shows the PLQY and Scanning Electron Microscopy (SEM) pictures of the compositions of Example 4.

The present invention will be further illustrated in the following examples without being limited thereto.

### Examples

### Comparative Example 1:

GdVO₄:5 mol% Yb³⁺, 0.3 mol% Tm³⁺,10 mol% Zn²⁺ is prepared via the typical solid state reaction at high temperature:

Gd₂O₃(xYb₂O₃, yTm₂O₃, zZnO) + V₂O₅ → 2 GdVO₄:Yb³⁺,Tm³⁺,Zn²⁺

The synthesis was performed on the lab scale (up to 5 gram of GdVO₄ were synthesized).

Due to the high temperature solid state reaction, the solid state process yields large crystals with maximum particle diameters between 10 and 20 µm.

### Example 1:

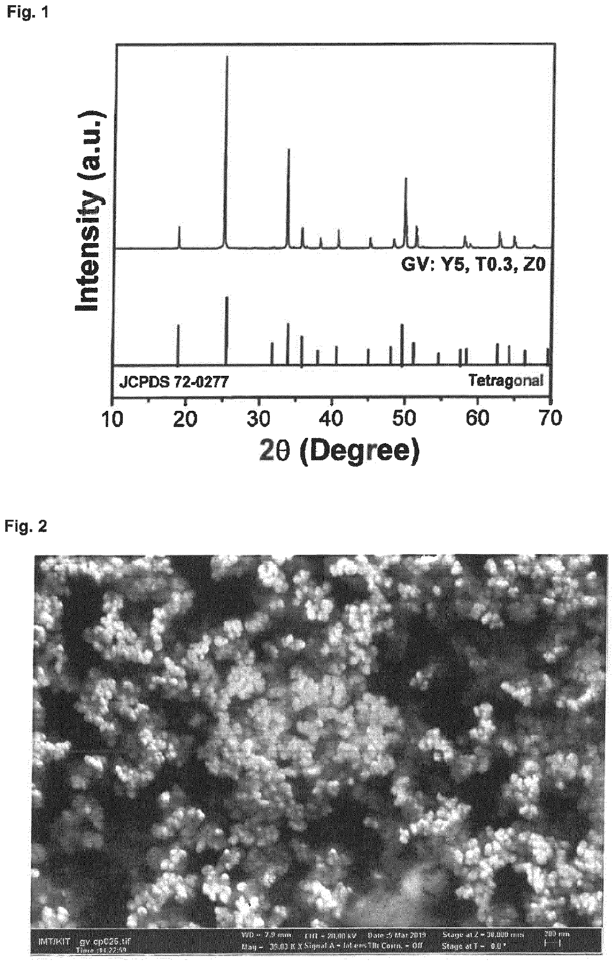

An aqueous first solution comprising Gd(NO₃)₃ in a concentration of 0.06776 mol/L, Yb(NO₃)₃ in a concentration of 0.004 mol/L, Tm(NO₃)₃ in a concentration of 0.00024 mol/L, and ZnCl₂ in a concentration of 0.008 mol/L is prepared. An aqueous second solution comprising Na₃VO₄ in a concentration of 0.08 mol/L is prepared. 50 mL of the first solution, 50 mL of the second solution and polyvinylpyrrolidone (concentration 10 g/L) are mixed, whereby one gram of precipitate is formed. The precipitate is filtered off and dried in an electrical oven at 60 °C. After that, the precipitate is calcined at 850 °C for 2 hours to obtain a submicron GdVO₄ composition doped with Yb³⁺, Rem and D and having the chemical formula GdVO₄:5 mol% Yb³⁺, 0.3 mol% Tm³⁺, 10 mol% Zn²⁺. Figure 1 shows an XRD spectrum of the obtained composition and displays the tetragonal structure of GdVO₄. Figure 2 shows a Scanning Electron Microscopy (SEM) picture of the obtained composition and shows a narrow size distribution of marker particles with a maximum particle diameter of each of the crystals of about 0.2 µm.

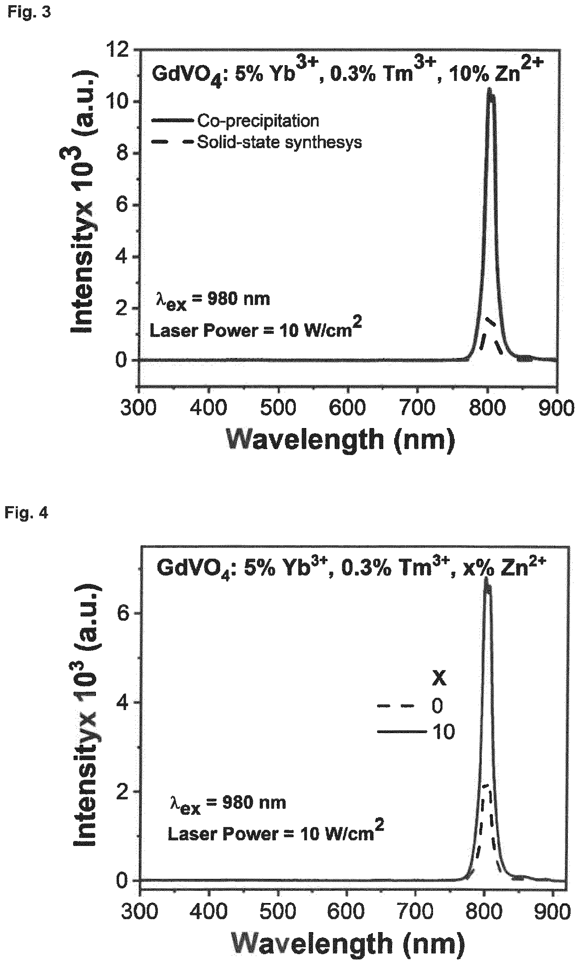

Figure 3 shows the up-conversion (UC) emission spectra of the compositions of Example 1 ("co-precipitation") and Comparative Example 1 ("solid-state synthesis") from 300 to 900 nm upon excitation with a 980 nm laser at an excitation intensity of 10 W/cm². The composition obtained via co-precipitation (Example 1) shows a significantly enhanced UC PLQY of 0.9 % at a near infrared wavelength of 800 nm when compared to the composition obtained via sold-state reaction.

### Comparative Example 2:

The composition of Comparative Example 2 is prepared similar to the composition of Example 1, except that no ZnCl₂ is present in the first solution.

The obtained composition is a submicron GdVO₄ composition doped with Yb³⁺ and Rem and has the chemical formula GdVO₄:5 mol% Yb³⁺, 0.3 mol% Tm³⁺. The particle size is about 200 nm.

Figure 4 shows the up-conversion (UC) emission spectra of the compositions of Example 1 (x = 10 mol% Zn²⁺) and Comparative Example 2 (x = 0 mol% Zn²⁺) from 300 to 900 nm upon excitation with a 980 nm laser at an excitation intensity of 10 W/cm². The composition co-doped with Zn²⁺ (Example 1) shows a 200 % enhancement of UC luminescence when compared to the composition without Zn²⁺ co-doping. The value of UC PLQY increases to about 0.9 %.

### Example 2:

Example 1 was repeated in a similar way, except that the rare earth element ion Er³⁺ was used instead of Tm³⁺, and that the co-doping amount of Zn²⁺ was varied. In particular, aqueous first solutions comprising Gd(NO₃)₃, Yb(NO₃)₃ (10 mol%), Er(NO₃)₃ (3 mol%), and ZnCl₂ in varying concentrations (0 mol%, 10 mol%, 15 mol%, 20 mol%, and 25 mol%) have been prepared. Separately, an aqueous second solution comprising Na₃VO₄ is prepared. The first and second aqueous solutions were mixed with polyvinylpyrrolidone as in Example 1 and the resulting precipitate was isolated as described in Example 1. After that, the precipitate is calcined at 800 °C for 2 hours to obtain GdVO₄ compositions doped with Yb³⁺ (10 mol%), Er³⁺ (3 mol%) and Zn²⁺ (0 mol% to 25 mol%) and having an average particle size of 1 µm.

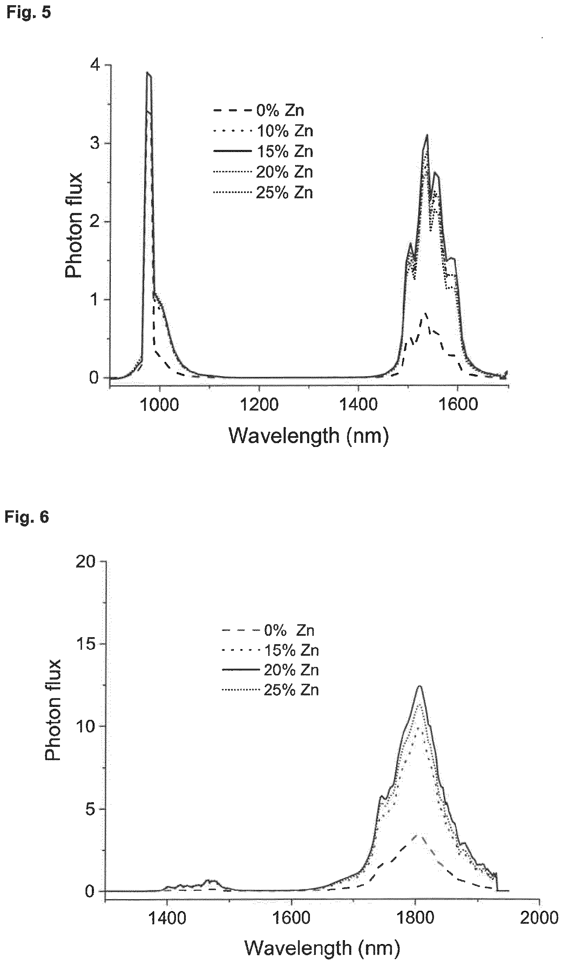

Figure 5 shows the down-shifting luminescence of the compositions obtained in Example 2, that is GdVO₄ markers co-doped with Yb³⁺ (10 mol%), Er³⁺ (3 mol%) as function of the Zn²⁺ concentration. The marker was excited with 980 nm laser at an excitation intensity of 15 W/cm². The results show that co-doping with Zn²⁺ leads to a significant enhancement of Er³⁺ luminescence (the peak in the range 1450 - 1650 nm).

### Example 3:

Example 1 was repeated in a similar way, except that the doping amount of the rare earth element ion Tm³⁺ was changed to 0.4 mol%, and that the co-doping amount of Zn²⁺ was varied in a similar way as described in Example 2 (0 mol%, 15 mol%, 20 mol%, and 25 mol%). In particular, aqueous first solutions comprising Gd(NO₃)₃, Yb(NO₃)₃ (5 mol%), Tm(NO₃)₃ (0.4 mol%), and ZnCl₂ in varying concentrations have been prepared. Separately, an aqueous second solution comprising Na₃VO₄ is prepared. The first and second aqueous solutions were mixed with polyvinylpyrrolidone as in Example 1 and the resulting precipitate was isolated as described in Example 1. After that, the precipitate is calcined at 800 °C for 2 hours to obtain GdVO₄ compositions doped with Yb³⁺ (5 mol%), Tm³⁺ (0.4 mol%) and Zn²⁺ (0 mol% to 25 mol%) and having an average particle size of up to 5 µm.

Figure 6 shows the down-shifting luminescence of the compositions obtained in Example 3, that is GdVO₄ markers co-doped with Yb³⁺ (5 mol%), Tm³⁺ (0.4 mol%) as function of the Zn²⁺ concentration. The marker was excited with 980 nm laser at an excitation intensity of 15 W/cm². The results show that co-doping with Zn²⁺ leads to a significant enhancement of Tm³⁺ luminescence (the peak in the range 1700 - 1900 nm).

### Example 4:

In Example 4, Example 1 was repeated in a similar way, except that the rare earth element ion Er³⁺ was used instead of Tm³⁺, and that the calcination temperature was varied in order to evaluate an influence on the particle size. In particular, GdVO₄ co-doped with Yb³⁺ (10 mol%), Er³⁺ (2 mol%) and Zn²⁺ (15 mol%) were prepared and calcined at 600 °C, 650 °C, 700 °C, 750 °C, and 800 °C. The calcination time was 2 hours.

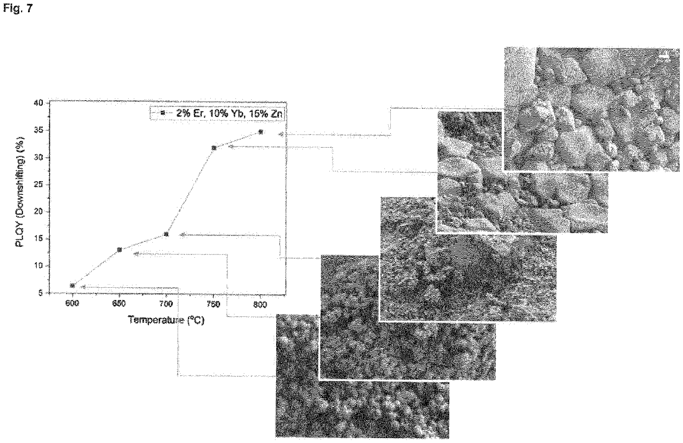

Figure 7 shows SEM pictures of the obtained compositions. The calcination at different temperature results in an average particle size of 300 nm (T_{calc} = 600 °C) and 1 µm (T_{calc} = 800 °C).

Figure 7 further shows PLQY of GdVO₄ markers co-doped with Yb³⁺ (10 mol%), Er³⁺ (3 mol%) and Zn²⁺ (15 mol%) as function of the calcination temperature. The markers were excited with 980 nm laser at an excitation intensity of 15 W/cm². Luminescence of Er³⁺ between 1450 and 1650 nm was collected in order to estimate PLQY.

## Claims

1. An MVO₄ composition doped with Yb³⁺, Rem and D and having the chemical formula MVO₄:Yb³⁺,Rem,D
wherein M is at least one ion selected from Gd³⁺, Y³⁺, La³⁺ and Lu³⁺,
wherein Rem is at least one rare earth element ion selected from Ce³⁺, Dy³⁺, Er³⁺, Eu³⁺, Ho³⁺, Nd³⁺, Pr³⁺, Sm³⁺, Tb³⁺ and Tm³⁺,
wherein D is at least one metal ion selected from Zn²⁺, Mg²⁺, Ca²⁺ and Sr²⁺, and
wherein the doping amount of MVO₄ is that 1.0 to 40 mol% of the M³⁺ ions of the host matrix MVO₄ are substituted by Yb³⁺ ions, 0.1 to 5.0 mol% of the M³⁺ ions of the host matrix MVO₄ are substituted by Rem ions, and 5.0 to 25 mol% of the M³⁺ ions of the host matrix MVO₄ are substituted by D ions.

2. The composition according to claim 1, wherein M is Gd³⁺.

3. The composition according to claim 1 or 2, wherein Rem is at least one rare earth element ion selected from Er³⁺, Ho³⁺ and Tm³⁺.

4. The composition according to claim 3, wherein Rem is Tm³⁺ or Er³⁺.

5. The composition according to any one of claims 1 to 4, wherein D is Zn²⁺.

6. The composition according to any one of claims 1 to 5, wherein the doping amount of Yb³⁺ is from 3.0 to 7.0 mol%.

7. The composition according to any one of claims 1 to 6, wherein the doping amount of Rem is from 0.3 to 0.5 mol%.

8. The composition according to any one of claims 1 to 7, wherein the doping amount of D is from 8.5 to 13 mol%.

9. The composition according to any one of claims 1 to 8, wherein each of the particles (crystals) of the composition has a diameter of less than 1 µm.

10. The composition according to any one of claims 1 to 9, wherein each of the particles (crystals) of the composition has a diameter of 0.5 µm or less.

11. A method for producing the MVO₄ composition doped with Yb³⁺, Rem and D according to any one of claims 1 to 10, comprising:
providing a first solution comprising an M-source, a Yb-source, a Rem-source and a D-source;
providing a second solution comprising a V-source;
mixing the first solution, the second solution and a water-soluble polymer or an organic ligand, thereby forming a precipitate;
separating and drying the precipitate; and
calcining the precipitate to obtain the MVO₄ composition doped with Yb³⁺, Rem and D.

12. The method according to claim 11, wherein the M-source is Gd(NO₃)₃, the Yb-source is Yb(NO₃)₃, the Rem-source is Rem(NO₃)₃, the D-source is a chloride of D, and the V-source is Na₃VO₄.

13. The method according to claim 11 or 12, wherein calcining the precipitate is carried out at a temperature of from 750 °C to 950°C for 1 to 3 hours.

14. The method according to any one of claims 11 to 13, wherein polyvinylpyrrolidone is used as the water-soluble polymer.

15. Use of the MVO₄ composition according to any one of claims 1 to 10 for sorting or as photonic marker in anti-counterfeiting or for quality control.

## Patentansprüche

1. MVO₄-Zusammensetzung mittels Yb³⁺, Rem et D dotiert und mit der chemischen Formel MVO₄:Yb³⁺,Rem,D
wobei M mindestens ein Ion, ausgewählt aus Gd³⁺, Y³⁺, La³⁺ und Lu³⁺ ist,
wobei Rem mindestens ein Ion der Seltenerdelemente ausgewählt aus Ce³⁺, Dy³⁺, Er³⁺, Eu³⁺, Ho³⁺, Nd³⁺, Pr³⁺, Sm³⁺, Tb³⁺ und Tm³⁺ ist,
wobei D mindestens ein Metallion ausgewählt aus Zn²⁺, Mg²⁺, Ca²⁺ und Sr²⁺ ist, und
wobei die Dotiermenge von MOV₄ so ist, dass 1.0 bis 40 mol% der M³⁺-Ionen der Wirtsmatrix MVO₄ durch Yb³⁺-Ionen substituiert sind, 0.1 bis 5.0 mol% der M³⁺-Ionen der Wirtsmatrix MVO₄ durch Rem-Ionen substituiert sind, und 5.0 bis 25 mol% der M³⁺-lonen der Wirtsmatrix MVO₄ durch D-Ionen substituiert sind.

2. MVO₄-Zusammensetzung nach Anspruch 1, wobei M Gd³⁺ist.

3. MVO₄-Zusammensetzung nach Anspruch 1 oder 2, wobei Rem mindestens ein Ion der Seltenerdelemente ausgewählt aus Er³⁺, Ho³⁺ und Tm³⁺ ist.

4. MVO₄-Zusammensetzung nach Anspruch 3, wobei Rem Tm³⁺ oder Er³⁺ ist.

5. MVO₄-Zusammensetzung nach einem der Ansprüche 1 bis 4, wobei D Zn²⁺ ist.

6. MVO₄-Zusammensetzung nach einem der Ansprüche 1 bis 5, wobei die Dotiermenge von Yb³⁺ zwischen 3.0 und 7.0 mol% ist.

7. MVO₄-Zusammensetzung nach einem der Ansprüche 1 bis 6, wobei die Dotiermenge von Rem zwischen 0.3 und 0.5 mol% ist.

8. MVO₄-Zusammensetzung nach einem der Ansprüche 1 bis 7, wobei die Dotiermenge von D zwischen 8.5 und 13 mol% ist.

9. MVO₄-Zusammensetzung nach einem der Ansprüche 1 bis 8, wobei jedes der Partikel (Kristalle) der Zusammensetzung einen Durchmesser von weniger als 1 µm hat.

10. MVO₄-Zusammensetzung nach einem der Ansprüche 1 bis 9, wobei jedes der Partikel (Kristalle) der Zusammensetzung einen Durchmesser von 0.5 µm oder weniger hat.

11. Verfahren zur Herstellung der MVO₄-Zusammensetzung mittels Yb³⁺, Rem et D dotiert nach einem der Ansprüche 1 bis 10, umfassend :
Bereitstellen einer ersten Lösung umfassend eine M-Quelle, eine Yb-Quelle, eine Rem-Quelle und eine D-Quelle ;
Bereitstellen einer zweiten Lösung umfassend eine V-Quelle ;
Mischen der ersten Lösung, der zweiten Lösung und eines wasserlöslichen Polymers oder eines organischen Ligands, dadurch Bilden eines Fällungsprodukts;
Trennen und Trocknen des Fällungsprodukts; und
Kalzinieren des Fällungsprodukts, um die MVO₄-Zusammensetzung mittels Yb³⁺, Rem et D dotiert zu gewinnen.

12. Verfahren nach Anspruch 11, wobei die M-Quelle Gd(NO₃)₃, die Yb-Quelle Yb(NO₃)₃, die Rem-Quelle Rem(NO₃)₃, die D-Quelle ein D-Chlorid, und die V-Quelle Na₃VO₄ ist.

13. Verfahren nach Anspruch 11 oder 12, wobei das Kalzinieren des Fällungsprodukts bei einer Temperatur zwischen 750°C und 950°C während 1 bis 3 Stunden erfolgt.

14. Verfahren nach Anspruch 11 bis 13, wobei Polyvinylpyrrolidon als das wasserlösliche Polymer genutzt wird.

15. Verwendung der MVO₄-Zusammensetzung nach einem der Ansprüche 1 bis 10 zum Sortieren oder als photonischer Marker in der Fälschungssicherheit oder zur Qualitätskontrolle.

## Revendications

1. Composition de MVO₄ dopée avec Yb³⁺, Rem et D et ayant la formule chimique
MVO₄:Yb³⁺,Rem,D dans laquelle
M est au moins un ion choisi parmi Gd³⁺, Y³⁺, La³⁺ et Lu³⁺,
Rem est au moins un ion de terres rares choisi parmi Ce³⁺, Dy³⁺, Er³⁺, Eu³⁺, Ho³⁺, Nd³⁺, Pr³⁺, Sm³⁺, Tb³⁺ et Tm³⁺,
D est au moins un ion métallique choisi parmi Zn²⁺, Mg²⁺, Ca²⁺ et Sr²⁺, et
dans laquelle la quantité de dopage de MVO₄ est telle que 1.0 à 40 mol% d'ions M³⁺ de la matrice hôte MVO₄ sont substitués par des ions Yb³⁺, 0.1 à 5.0 mol% des ions M³⁺ de la matrice hôte MVO₄ sont substitués par des ions Rem, et 5.0 à 25 mol% des ions M³⁺ de la matrice hôte MVO₄ sont substitués par des ions D.

2. Composition selon la revendication 1, dans laquelle M est Gd³⁺.

3. Composition selon la revendication 1 ou 2, dans laquelle Rem est au moins un ion de terres rares choisi parmi Er³⁺, Ho³⁺ et Tm³⁺.

4. Composition selon la revendication 3, dans laquelle Rem est Tm³⁺ ou Er³⁺.

5. Composition selon l'une quelconque des revendications 1 à 4, dans laquelle D est Zn²⁺.

6. Composition selon l'une quelconque des revendications 1 à 5, dans laquelle la quantité de dopage de Yb³⁺ est comprise entre 3.0 et 7.0 mol%.

7. Composition selon l'une quelconque des revendications 1 à 6, dans laquelle la quantité de dopage de Rem est comprise entre 0.3 et 0.5 mol%.

8. Composition selon l'une quelconque des revendications de 1 à 7, dans laquelle la quantité de dopage de D est comprise entre 8.5 et 13 mol%.

9. Composition selon l'une quelconque des revendications de 1 à 8, dans laquelle chacune des particules (cristaux) de la composition a un diamètre de moins de 1 µm.

10. Composition selon l'une quelconque des revendications de 1 à 9, dans laquelle chacune des particules (cristaux) de la composition a un diamètre de 0.5 µm ou moins.

11. Procédé de fabrication de la composition de MVO₄ dopée avec Yb³⁺, Rem et D selon l'une quelconque des revendications de 1 à 10, comprenant :
la mise à disposition d'une première solution comprenant une source de M, une source de Yb, une source de Rem et une source de D ;
la mise à disposition d'une seconde solution comprenant une source de V ;
le mélange de la première solution, de la seconde solution et d'un polymère soluble dans l'eau ou d'un ligand organique, formant ainsi un précipité ;
la séparation et le séchage du précipité ; et
la calcination du précipité pour obtenir la composition de MVO₄ dopée avec Yb³⁺, Rem et D.

12. Procédé selon la revendication 11, dans lequel la source de M est Gd(NO₃)₃, la source de Yb est Yb(NO₃)₃, la source de Rem est Rem(NO₃)₃, la source de D est un chlorure de D, et la source de V est Na₃VO₄.

13. Procédé selon la revendication 11 ou 12, dans lequel la calcination du précipité est effectuée à une température comprise entre 750°C et 950°C pendant 1 à 3 heures.

14. Procédé selon l'une quelconque des revendications 11 à 13, dans lequel la polyvinylpyrrolidone est utilisée comme le polymère soluble dans l'eau.

15. Utilisation de la composition de MVO₄ selon l'une quelconque des revendications 1 à 10 pour trier ou comme marqueur photonique d'anti-contrefaçon ou pour le contrôle qualité.
